# EUROPEAN PATENT APPLICATION

(11) **EP 2 949 629 A1**
(43) Date of publication of application: **02.12.2015**
(21) Application number: 13882298.6
(22) Date of filing: 18.04.2013
(51) Int. Cl.: C02F 1/469, B01D 61/14, B01D 61/16, C02F 1/44, C02F 1/58

(54) **WATER TREATMENT SYSTEM**

(71) Applicant: Mitsubishi Heavy Industries, Ltd., Tokyo 108-8215 (JP)
(72) Inventor: UKAI, Nobuyuki, Tokyo 108-8215 (JP); SUZUKI, Hideo, Tokyo 108-8215 (JP); YOSHIOKA, Shigeru, Tokyo 108-8215 (JP); TAKEUCHI, Kazuhisa, Tokyo 108-8215 (JP); SATOU, Jun, Tokyo 108-8215 (JP); SAKURAI, Hideaki, Tokyo 108-8215 (JP); OKINO, Susumu, Tokyo 108-8215 (JP); NAKASHOJI, Hiroshi, Tokyo 108-8215 (JP)
(74) Representative: Bongiovanni, Simone
(86) International application number: PCT/JP2013/061461
(87) International publication number: WO 2014/170981

(57) **Abstract**

A water treatment system (1) includes a deionization unit (10) and an ion-selective removing unit (20). The deionization unit (10) includes a pair of opposing electrodes that is charged to have polarities opposite to each other, a flow passageway positioned between the electrodes and enabling passage of water containing ions, and an ion-exchange membrane that is disposed on the flow passageway side of each of the electrodes, and performs a deionization process of deionizing the water containing the ions by allowing the ions to be adsorbed onto the electrodes and a regeneration process of eliminating the ions from the electrodes. The ion-selective removing unit (20) is disposed on the downstream side or upstream side of the deionization unit (10) to separate and remove divalent or more ions from the water containing the ions because the ratio of removing the divalent or more ions that are the scale component among the ions is relatively higher than the ratio of removing monovalent ions from the water containing the ions. The water treatment system (1) can increase the ratio of removing scale component ions.

## Description

### Technical Field

The present invention relates to a water treatment system that performs a deionization process.

### Background Art

A cleaning process such as removal of heavy metal components and floating particles or decomposition and removal of organic substances is carried out on industrial waste water that is discharged from industrial plants. In a place where it is difficult to ensure industrial water, the treated water subjected to the cleaning process is re-used as the industrial water. In this case, a deionization process of removing ion components contained in the waste water is carried out after the heavy metal components, floating particles, organic substances, and the like are removed.

As one example of a deionization apparatus, PTL 1 discloses a deionization apparatus in which a liquid-passing type condenser that performs removal and collection (regeneration) of ion components in water to be treated by using electrostatic force and a reverse osmosis membrane apparatus that is disposed on a downstream side of the liquid-passing type condenser are combined.

Among the ions contained in water, monovalent cations such as Na⁺, K⁺, and NH₄⁺ and anions such as Cl⁻ and F⁻ are ions having a high solubility into water. On the other hand, divalent metal ions such as Ca²⁺ and Mg²⁺, anions such as SO₄²⁻ and CO₃²⁻, and silica ions are components constituting a scale. A salt produced by bonding of ions that are the components constituting a scale or silica has a low solubility to water and hence is liable to be deposited as a scale. When water containing a large amount of ions constituting the scale component flows into the reverse osmosis membrane apparatus and a state exceeding a saturation concentration is maintained on an in-flow side of the reverse osmosis membrane, the scale is deposited on the reverse osmosis membrane to lower the treatment capability. According to the construction disclosed in PTL 1, the water is sent to the reverse osmosis membrane apparatus after the ions are removed by the liquid-passing type condenser, so that the burden of treatment in the reverse osmosis membrane apparatus can be reduced.

### Citation List

### Patent Literature

{PTL 1} The Publication of Japanese Patent No. 4135802

### Summary of Invention

### Technical Problem

However, in the liquid-passing type condenser described above, the selectivity of the valence number of the ions that are to be removed is low. For this reason, not only the ions (scale component ions) that constitute the above scale component but also other ions (for example, components that are less likely to be deposited as a scale, such as Na⁺ or Cl⁻) must be removed at the same time. In the case of treating the water containing a comparatively large amount of scale component ions by using the deionization apparatus of PTL 1, the water having a high concentration of the scale component ions is fed to the reverse osmosis membrane apparatus without sufficient removal. In order that the water having a high ion concentration may not be fed to the reverse osmosis membrane apparatus, sufficient removal must be carried out in the liquid-passing type condenser by connecting a plurality of the liquid-passing type condensers, for example. However, in this case, there has been a problem of increase in the size of the apparatus.

As another method for removing the scale component ions, there is a method of depositing and precipitating salts containing Ca or Mg by adding a chemical agent to the water to be treated before allowing the water to flow into the liquid-passing type condenser and the reverse osmosis membrane apparatus. In this case, there is a need to provide a precipitation tank, thereby leading to increase in the size of the apparatus. Also, there has been a problem of mixing of unnecessary chemical agents into the water to be treated.

A purpose of the present invention is to provide a water treatment system that can suppress the production of a scale more effectively by increasing the ratio of removing the scale component ions.

### Solution to Problem

A water treatment system according to one aspect of the present invention includes a deionization unit and an ion-selective removing unit. The deionization unit includes a pair of opposing electrodes that is charged to have polarities opposite to each other, a flow passageway positioned between the electrodes and enabling passage of water containing ions, and an ion-exchange membrane that is disposed on the flow passageway side of each of the electrodes, and performs a deionization process of deionizing the water containing the ions by allowing the ions to be adsorbed onto the electrodes and a regeneration process of eliminating the ions from the electrodes. The ion-selective removing unit is disposed on a downstream side or upstream side of the deionization unit to separate and remove divalent or more ions from the water containing the ions because a ratio of removing the divalent or more ions that are the scale component among the ions is relatively higher than a ratio of removing monovalent ions from the water containing the ions.

In the water treatment system according to the above aspect, the ion-selective removing unit is disposed on the downstream side of the deionization unit, and the ion-selective removing unit may remove the divalent or more ions from the treated water that is subjected to the deionization process in the deionization unit.

In this case, multivalent ion concentrated water containing the divalent or more ions that is separated in the ion-selective removing unit is preferably discharged from the ion-selective removing unit and supplied to an upstream side of the deionization unit.

In the water treatment system according to the above aspect, the ion-selective removing unit is disposed on an upstream side of the deionization unit, and the deionization unit may receive multivalent ion concentrated water containing the divalent or more ions that is separated in the ion-selective removing unit, to perform a deionization process on the multivalent ion concentrated water.

In this case, treated water that is discharged from the deionization unit in the deionization process is further preferably supplied to an upstream side of the ion-selective removing unit.

The water to be treated contains scale component ions such as alkaline earth metal ions (Ca²⁺, Sr²⁺, Ba²⁺) , Mg²⁺, sulfate-based ions, carbonate-based ions, phosphate ions, sulfide ions, and F⁻. When the salts of the above components become supersaturated, the salts deposit as a scale. On the other hand, when at least the divalent metal ions (alkaline earth metal ions and Mg²⁺) among the above ions are removed, the scale deposition can be prevented even when monovalent scale component ions such as F⁻ or HCO₃⁻ remain.

The ion-selective removing unit in the above water treatment system is specifically a nanofilter having ion selectivity. The present inventors and others paid attention to the fact that the ratio of removal by the nanofilter differs depending on the kind of the ion, and the ratio of removal of divalent or more ions (alkaline earth metal ions, Mg²⁺, SO₄²⁻, and the like) that constitute the scale component can be greatly increased.

In the above water treatment system, the deionization unit that performs an electrostatic deionization process and the ion-selective removing unit are combined.

In the deionization unit, deionization and regeneration are alternately repeated, so that a scale is hardly produced on the electrode and on the ion-exchange membrane. On the other hand, there is no valence number selectivity of the removed ions, so that all the ions in the water to be treated are removed. Also, a large amount of electric power is needed for the treatment, so that the operation cost is high.

In the ion-selective removing unit, the ratio of removing divalent or more ions (scale component ions) is as high as 80% or more. On the other hand, in the ion-selective removing unit, the ratio of removing monovalent ions that do not constitute the scale is as low as, for example, about 45 to 80%. The water treatment system of the present invention can separate and remove the divalent or more ions contained in the water while permitting passage of the monovalent ions that do not constitute the scale to some extent. The larger the difference between the ratio of removing divalent or more ions and the ratio of removing monovalent ions is, the more the separation effect is enhanced. Here, "separation and removal of divalent or more ions" in the present invention refers to a state in which 80% or more, preferably 98% or more, more preferably 99.8% or more, of divalent or more ions are removed from the water.

The ion-selective removing unit concentrates the ions. For example, problems such as production of a scale are not raised even when monovalent ions such as alkali metal ions and anions such as Cl⁻, Br⁻, I⁻, and NO₃⁻ remain in the treated water. However, when the scale component ions are concentrated by the ion-selective removing unit, there is a disadvantage in that the scale is liable to be produced.

Therefore, which of the deionization unit and the ion-selective removing unit is disposed on the upstream side is determined in accordance with the advantages and disadvantages of each of the deionization unit and the ion-selective removing unit and the water quality of the water to be treated.

A construction in which the deionization unit is disposed on the upstream side is adopted when the scale component constructed by containing divalent or more ions is close to the saturation solubility or higher than the saturation solubility because the ratio of the divalent or more ions relative to the total ion concentration in the water to be treated (divalent or more ion concentration / total ion concentration) or the ratio of the divalent or more ions relative to the monovalent ion concentration (divalent or more ion concentration / monovalent ion concentration) is high. This construction allows that, after rough removal of reducing the divalent or more ion concentration to some extent is carried out in the deionization unit, the divalent or more ions are selectively removed in the ion-selective removing unit. By doing so, the ratio of removing the divalent or more ions in the water treatment system can be increased, and the scale production in the ion-selective removing unit can be effectively prevented.

In particular, the ratio of removing the divalent or more ions can be further more increased by adopting a construction in which the multivalent ion concentrated water discharged from the ion-selective removing unit is circulated to the deionization unit.

On the other hand, a construction in which the ion-selective removing unit is disposed on the upstream side is adopted when the scale component constructed by containing divalent or more ions in the water to be treated is close to the saturation solubility or lower than the saturation solubility. In such a case, the fear of scale production is low even when the ions are concentrated by previous treating of the water to be treated in the ion-selective removing unit. Since the concentrated water produced by the ion-selective removing unit is treated in the deionization unit, the amount of water fed to the deionization unit decreases. For this reason, the volume of the apparatus can be diminished, and also the amount of electric power for operating the deionization unit can be reduced.

In particular, the ion removal ratio can be further more increased, and the ratio of collecting water in the water treatment system can be further more increased by adopting a construction in which the treated water in the deionization unit is circulated to the ion-selective removing unit.

Here, in the case in which the scale component containing the divalent or more ions is close to the saturation solubility, either of the construction in which the deionization unit is disposed on the upstream side and the construction in which the ion-selective removing unit is disposed on the upstream side may be adopted. In this case, which construction to adopt is suitably determined in consideration of the operation cost and the need to the water quality after treatment in each of the deionization unit and the ion-selective removing unit.

In the above aspect, an ion concentrating unit that receives the treated water and the water subjected to removal of the divalent or more ions in the ion-selective removing unit to concentrate the ions in the received water may be disposed on a downstream side of the deionization unit and the ion-selective removing unit.

The ion concentrating unit includes at least one of a deionization apparatus, a cooling tower, and a boiler.

As described above, the divalent or more ion concentration in the treated water produced by the water treatment system of the present invention is greatly reduced. Even when this treated water is treated or used in an apparatus (ion concentrating unit) where ions are concentrated in the system, such as a reverse osmosis membrane apparatus or a cooling tower, the scale production in the ion concentrating unit can be suppressed.

In the above aspect, a pH adjusting unit that adjusts a pH value of the water subjected to removal of the divalent or more ions by putting an alkali metal hydroxide into the water subjected to removal of the divalent or more ions is preferably disposed on a downstream side of the deionization unit and the ion-selective removing unit and on an upstream side of the ion concentrating unit.

Ionic silica and non-ionic silica remain in the water after the scale component ions are treated in the deionization unit and the ion-selective removing unit. These are also scale components. Silica has a different dissolution state depending on the pH value. When the pH value is 9 or more, the silica is considerably dissolved in water as ionic silica. In the present invention, silica is brought into a state of being dissolved in the treated water by appropriate adjustment of the pH value of the treated water in the pH adjusting unit disposed downstream of the deionization unit and the ion-selective removing unit. This allows that the scale production of silica in the ion concentrating unit can be suppressed with certainty.

In the above aspect, the deionization unit may be connected to a separation unit that receives concentrated water that is discharged from the deionization unit in the regeneration process, the separation unit may include a precipitation unit that deposits and precipitates the divalent or more ions in the concentrated water as a solid and a dehydration unit that separates the solid from the water containing the solid that is discharged from the precipitation unit, and supernatant liquid in the precipitation unit may be supplied to an upstream side of the deionization unit or to an upstream side of the ion-selective removing unit.

By adopting such a construction, the solid containing scale component ions such as CaCO₃ or CaSO₄ can be separated and collected from the concentrated water. Further, by circulating the water after separation to the deionization unit or the ion-selective removing unit, the water collection ratio can be further more improved.

In the above aspect, a separation unit may include a precipitation unit that deposits and precipitates the divalent or more ions in the water containing the ions as a solid and a dehydration unit that separates the solid from the water containing the solid that is discharged from the precipitation unit is disposed on an upstream side of the deionization unit, and supernatant liquid discharged from the precipitation unit may be fed to the deionization unit or to the ion-selective removing unit to be subjected to the deionization process.

When the scale component in the water serving as an object of treatment has a water quality near the saturation solubility or exceeding the saturation solubility, the concentration of the scale component ions can be reduced before the water flows into the deionization unit and the ion-selective removing unit by adopting the above construction, whereby the scale production in the ion-selective removing unit and the ion concentrating unit can be prevented.

### Advantageous Effects of Invention

In the water treatment system of the present invention, the divalent or more ions can be separated and removed at a high efficiency from the water to be treated by combining the ion-selective removing unit and the deionization unit by electrostatic deionization. For this reason, the scale production in the ion concentrating unit can be suppressed even when an apparatus (ion concentrating unit) where ions are concentrated is disposed on the downstream side.

Further, the water treatment system of the present invention produces an effect of enabling size reduction as compared with a conventional apparatus.

### Brief Description of Drawings

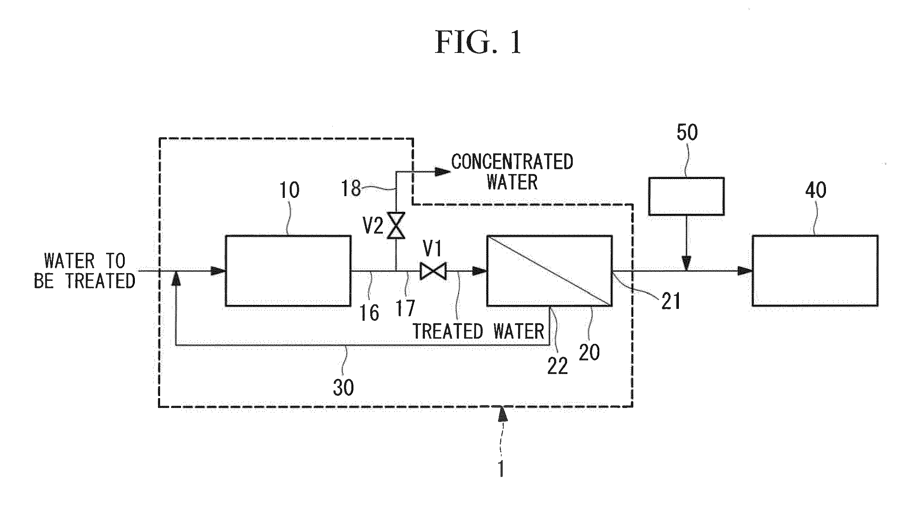

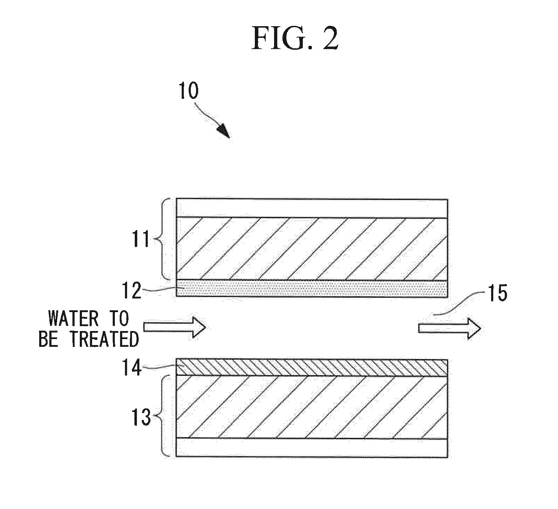

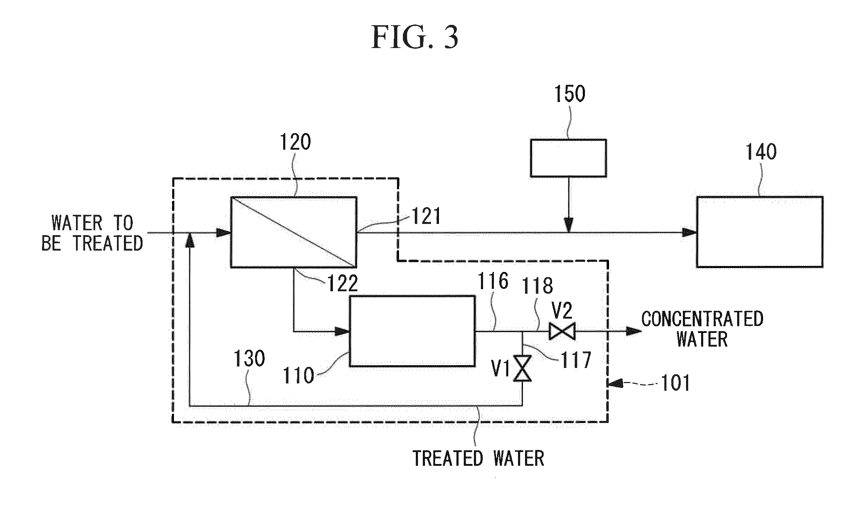

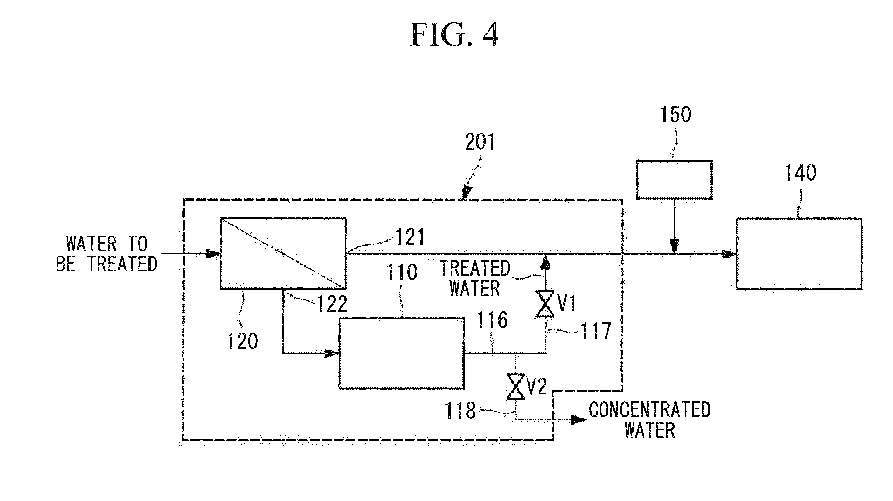

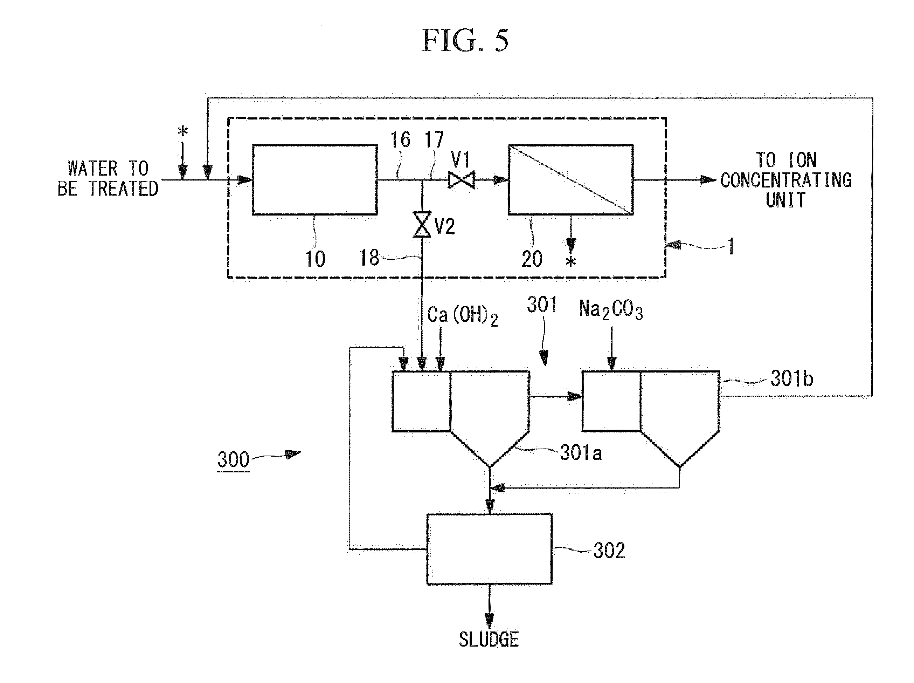

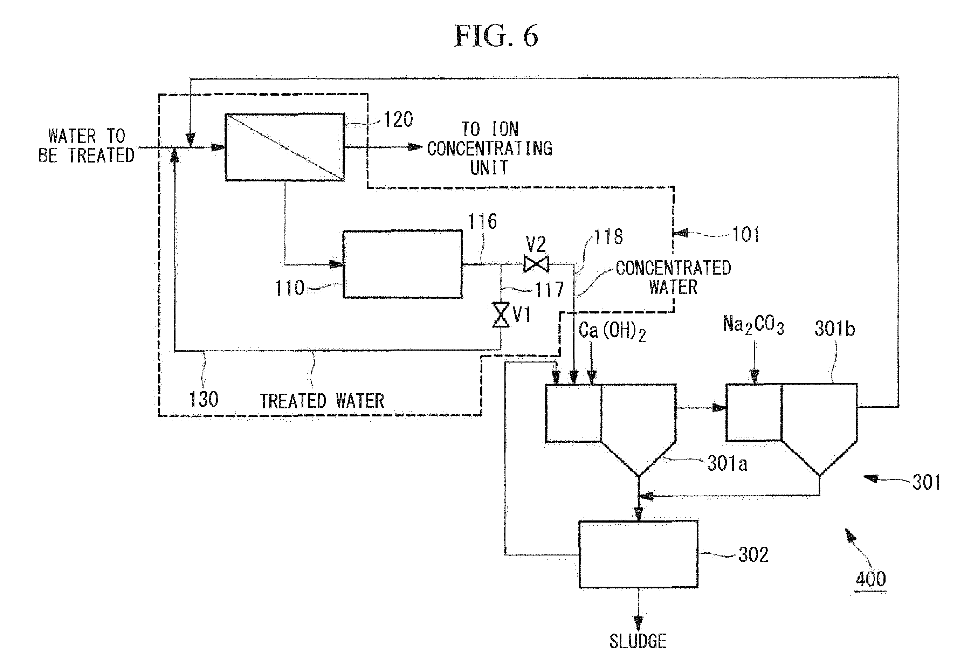

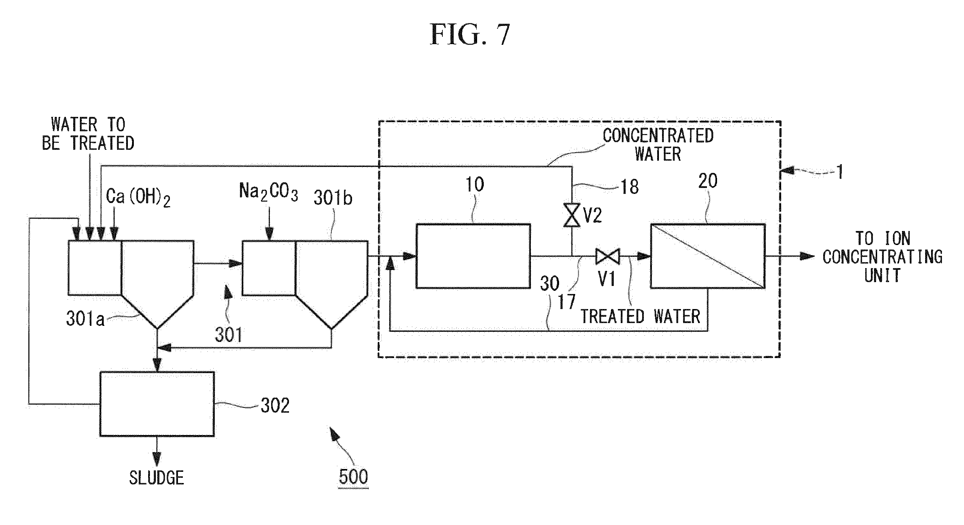

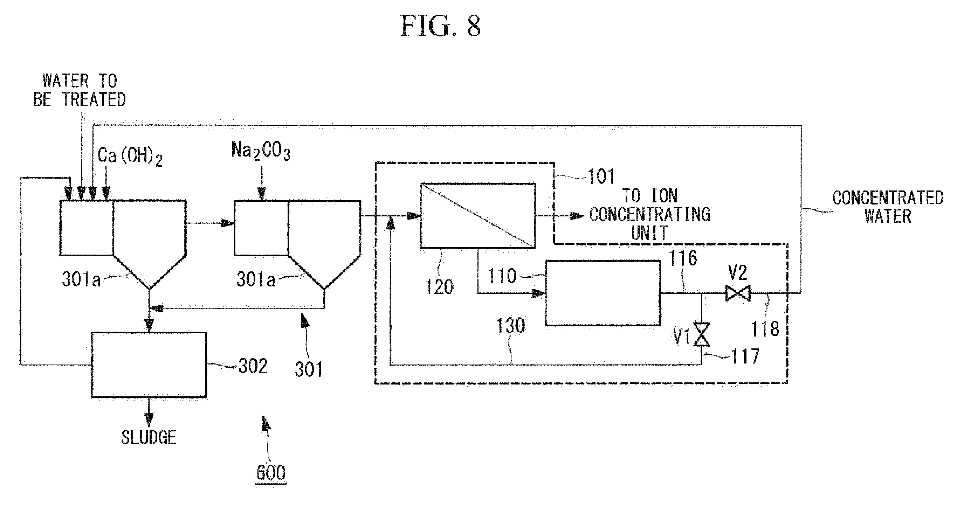

{Fig. 1} A schematic view of a water treatment system according to a first embodiment.
{Fig. 2} A schematic view of a deionization unit.
{Fig. 3} A schematic view of a water treatment system according to a second embodiment.
{Fig. 4} A schematic view of a water treatment system according to another example of the second embodiment.
{Fig. 5} A schematic view explaining a construction in which Ca is separated and collected as a solid from the concentrated water of the deionization unit in the water treatment system of the first embodiment.
{Fig. 6} A schematic view explaining a construction in which Ca is separated and collected as a solid from the concentrated water of the deionization unit in the water treatment system of the second embodiment.
{Fig. 7} A schematic view explaining a construction in which a separation unit is disposed on an upstream side of the water treatment system of the first embodiment.
{Fig. 8} A schematic view explaining a construction in which a separation unit is disposed on an upstream side of the water treatment system of the second embodiment.

### Description of Embodiments

### First Embodiment

FIG. 1 is a schematic view of a water treatment system according to the first embodiment of the present invention. A water treatment system 1 of the first embodiment includes a deionization unit 10 and an ion-selective removing unit 20 in the order from the upstream side of the water to be treated.

The water to be treated contains cations such as alkali metal ions such as Na⁺ and K⁺, alkaline earth metal ions such as Ca²⁺ and Ba²⁺, and Mg²⁺, and anions such as F⁻, Cl⁻, Br⁻, I⁻, NO₃⁻, SO₄²⁻, HSO₄⁻, SO₃²⁻, HSO₃⁻, CO₃²⁻, HCO₃⁻, PO₄³⁻, HS⁻, and S²⁻. Here, the ions mentioned above are merely exemplifications, so that the ions are not limited to these alone.

Among these, the alkaline earth metal ions (Ca²⁺, Sr²⁺, Ba²⁺), Mg²⁺, sulfate-based ions (SO₄²⁻, SO₃²⁻) carbonate-based ions (HCO₃⁻, CO₃²⁻), phosphate ions (PO₄³⁻), sulfide ions (HS⁻, S²⁻), and F⁻ are scale component ions. When a state in which the concentration of salts containing the above scale component ions in the water exceeds the saturation solubility is continued, a scale is produced. The period of time from the time point at which the concentration of the salts exceeds the saturation solubility to the time point at which the scale is produced changes depending on the conditions such as the ion concentration and the pH.

When at least the alkaline earth ions and Mg²⁺ which are divalent metal ions among the above ions are removed, the scale production can be prevented. Therefore, when the ratio of removal of the divalent or more ions is raised in the water treatment system 1, the scale deposition can be prevented even when monovalent scale component ions such as F⁻ and HCO₃⁻ remain.

In the first embodiment in which the deionization unit 10 is disposed on the upstream side of the ion-selective removing unit 20, water to be treated in which the scale component constructed by containing divalent or more ions is close to the saturation solubility or higher than the saturation solubility because the divalent or more ion concentration / total ion concentration or the divalent or more ion concentration / monovalent ion concentration is high is an object of treatment. The above water to be treated is specifically blow-down water discharged from a cooling tower, mine waste water, desulfurization waste water, or the like. The above water to be treated has a property such that production of a scale is feared.

Referring to FIG. 1, a discharging passageway 16 is disposed on the downstream side of the deionization unit 10. The discharging passageway 16 is branched in the midway of the passageway to a treated water discharging passageway 17 and a concentrated water discharging passageway 18. Valves V1, V2 are placed in the treated water discharging passageway 17 and the concentrated water discharging passageway 18, respectively.

FIG. 2 is a schematic view of the deionization unit. Referring to FIG. 2, the deionization unit 10 includes a pair of opposing porous electrodes 11, 13 and a flow passageway 15 in which supplied water can pass between the electrodes. An anion-exchange membrane 12 is placed on the flow passageway side surface of the electrode 11, and a cation-exchange membrane 14 is placed on the flow passageway side surface of the electrode 13.

The ion-selective removing unit 20 is connected to the treated water discharging passageway 17. The ion-selective removing unit 20 is an apparatus that can separate divalent or more ions at a high efficiency from the water containing various ions.

Specifically, the ion-selective removing unit 20 is an apparatus provided with a nanofilter having ion selectivity. With the nanofilter interposed, the upstream side is a concentrating unit, and the downstream side is a treatment unit. The nanofilter is a filter having numerous pores of about 1 to 2 nm. The ratio (separation ratio) of removing divalent or more ions of the nanofilter that can be used in the present embodiment is 80% or more, preferably 98% or more, and more preferably 99.8% or more, and the ratio of removing other ions such as monovalent ions is 45 to 80%.

The ion-selective removing unit 20 includes a removed water discharging unit 21 and a multivalent ion concentrated water discharging unit 22. The removed water discharging unit 21 is connected to the treatment unit. The multivalent ion concentrated water discharging unit 22 is connected to the concentrating unit.

In order to raise the water collecting ratio, a circulating unit 30 that connects between the multivalent ion concentrated water discharging unit 22 and a pipe on the upstream side of the deionization unit 10 may be placed in the water treatment system 1 of the present embodiment, as shown in FIG. 1.

A method of performing a process of removing ions in the water to be treated by using the water treatment system 1 of the first embodiment will be described below.

### (A) Treatment in the deionization unit

The water to be treated having the above-described property flows into the deionization unit 10. The deionization unit 10 performs a deionization step and a regeneration step described below.

### (Deionization step)

A voltage is applied to the respective electrodes 11, 13 of the deionization unit 10 so that the electrode 11 becomes positive and the electrode 13 becomes negative. The above-described energization state is referred to as "positive". At this time, the valve V1 is opened, and the valve V2 is closed.

When the water to be treated containing ions passes through the flow passageway 15 between the electrodes 11, 13 energized to be positive, the anions in the water to be treated permeate through the anion-exchange membrane 12 to be adsorbed onto the electrode 11, and the cations permeate through the cation-exchange membrane 14 to be adsorbed onto the electrode 13. This allows that part of the ions is removed from the water to be treated, so as to reduce the ion concentration in the water to be treated. In this deionization process, approximately the same amount of monovalent ions and divalent or more ions are removed from the water to be treated.

The water to be treated having a reduced ion concentration is discharged from the deionization unit 10 as treated water, passes through the treated water discharging passageway 17, and is discharged to outside of the system of the deionization treatment apparatus so as to be collected.

### (Regeneration step)

After the deionization step is carried out for a predetermined period of time, a voltage is applied to the respective electrodes 11, 13 so that the electrode 11 becomes negative and the electrode 13 becomes positive. In other words, the electrodes are brought into a "reverse" energized state. As soon as the electrodes 11, 13 are brought into the reverse energized state, the valve V1 is closed, and the valve V2 is opened. This starts the regeneration step.

In the regeneration step, the ions adsorbed in the deionization step are eliminated from the electrodes 11, 13 and return to the flow passageway 15. The cations and anions that return to the flow passageway 15 are accumulated in the flow passageway 15 because the cations and the anions cannot permeate through the anion-exchange membrane 12 and the cation-exchange membrane 14, respectively.

After a predetermined period of time passes, purified water (clean water) is supplied from a system not illustrated in FIG. 1 or 2. The ions released to the flow passageway 15 are discharged from the deionization unit 10 together with the clean water. The water discharged from the deionization unit 10 passes through the concentrated water discharging passageway 18 as concentrated water and are discharged to outside of the water treatment system 1.

The deionization step and the regeneration step described above are alternately carried out each after a predetermined period of time passes. For example, the deionization step and the regeneration step are each carried out for 1 to 60 minutes, preferably 1 to 10 minutes.

### (B) Treatment in the ion-selective removing unit

The treated water discharged from the deionization unit 10 flows into the ion-selective removing unit 20. An amount of ions corresponding to the separation ratio among the ions contained in the treated water of the deionization unit cannot permeate through the nanofilter and hence remain in the concentrating unit. An amount of ions corresponding to (100% - separation ratio) permeate to the treatment unit side. Therefore, part of monovalent ions such as Na⁺ and Cl⁻ permeate through the ion-selective removing unit. On the other hand, 98% or more of divalent or more ions are removed by the ion-selective removing unit, so that the treated water is separated into water (multivalent ion concentrated water) containing divalent or more ions at a high concentration in the concentrating unit and water from which most of the divalent or more ions are removed (in which the concentration of divalent or more ions is reduced to 2% or less) in the treatment unit located on the downstream side.

In the case of the water treatment system in which the circulating unit 30 is disposed as shown in FIG. 1, the multivalent ion concentrated water passes through the circulating unit 30 to be supplied to the upstream side of the deionization unit 10. The multivalent ion concentrated water supplied to the upstream side of the deionization unit 10 is mixed with the water to be treated and is subjected to the deionization process in the deionization step in the deionization unit 10.

In the case in which the circulating unit is not disposed, the multivalent ion concentrated water is discharged through the multivalent ion concentrated water discharging unit 22 to outside of the water treatment system 1.

Table 1 shows a result of simulation when water containing ions is treated in the water treatment system of FIG. 1 as Example 1. Table 1 shows the concentration of ions and the total dissolved solid (TDS) concentration contained in the water to be treated (mine waste water) and the water that passes through the pipes L₁₋₁ to L₁₋₅. The positions of the pipes L₁₋₁ to L₁₋₅ are as follows.
L₁₋₁: deionization unit entrance pipe (downstream side of the circulating unit connecting position)
L₁₋₂: treated water discharging passageway
L₁₋₃: concentrated water discharging passageway
L₁₋₄: circulating unit pipe
L₁₋₅: removed water discharging unit pipe

The simulation was carried out under the following conditions.
deionization unit: water collecting ratio 80%, ion removing ratio 80%.
ion-selective removing unit: water collecting ratio 85%, divalent or more ion removing ratio 98%, monovalent ion removing ratio 60%.

As Comparative Example 1, simulation was carried out when water treatment was carried out on the water having the same property as in the above Example 1 with a water treatment system having only a deionization unit. Table 2 shows the TDS concentration and the concentration of ions contained in the water to be treated, the treated water of the deionization unit, and the concentrated water. The simulation was carried out under conditions with water collecting ratio of 80% and ion removing ratio of 80% in the deionization unit.

**[TABLE 1]**

| | TDS concentration, ion concentration (mg/l) | | | | | |
|---|---|---|---|---|---|---|
| | Water to be treated | L₁₋₁ | L₁₋₂ | L₁₋₃ | L₁₋₄ | L₁₋₅ |
| TDS | 6500 | 6778 | 1356 | 31336 | 8587 | 34 |
| Ca²⁺ | 595 | 622 | 124 | 2890 | 823 | 1.2 |
| Mg²⁺ | 750 | 784 | 157 | 3643 | 1037 | 1.6 |
| Na⁺ | 140 | 138 | 28 | 640 | 121 | 11 |
| K⁺ | 85 | 84 | 17 | 389 | 74 | 7 |
| NH₄⁺ | 1.7 | 1.7 | 0.3 | 7.8 | 1.5 | 0.1 |
| SO₄²⁻ | 4400 | 4601 | 920 | 21371 | 6083 | 9 |
| CO₃²⁻/HCO₃⁻ | 465 | 458 | 92 | 2125 | 403 | 37 |
| Cl⁻ | 45 | 44 | 8.9 | 206 | 39 | 4 |
| NO₃⁻ | 1.2 | 1.3 | 0.3 | 5.9 | 1.7 | 0.003 |

**[TABLE 2]**

| | TDS concentration, ion concentration (mg/l) | | |
|---|---|---|---|
| | Water to be treated | Treated water | Concentrate water |
| TDS | 6500 | 1300 | 27300 |
| Ca²⁺ | 595 | 119 | 2499 |
| Mg²⁺ | 750 | 150 | 3150 |
| Na⁺ | 140 | 28 | 588 |
| K⁺ | 85 | 17 | 357 |
| NH₄⁺ | 1.7 | 0.3 | 7 |
| SO₄²⁻ | 4400 | 880 | 18480 |
| CO₃²⁻/HCO₃⁻ | 465 | 93 | 1953 |
| Cl⁻ | 45 | 9 | 189 |
| NO₃⁻ | 1.2 | 0.2 | 5 |

In the water treatment system of Example 1, the TDS concentration in the treated water of L₁₋₅ is reduced as compared with the water treatment system of Comparative Example 1 in which the water to be treated having the same property is treated. In particular, in Example 1, the concentration of Ca²⁺, Mg²⁺, and SO₄²⁻ which are divalent or more ions constituting a scale is greatly reduced. Here, in Example 1 described above, though HCO₃⁻ which is a scale component ion remains to some extent in the treated water (L₁₋₅), scale deposition is not generated because the divalent metal ion concentration is low.

In this manner, in the case in which the water to be treated has a water property such that the scale component constituted by containing divalent or more ions is close to the saturation solubility or higher than the saturation solubility, the divalent or more ion concentration can be reduced to be extremely low when water treatmemt is carried out in the water regenerating treatment system having the construction of the first embodiment, so that it is advantageous in suppressing scale deposition.

In the water treatment system 1 of the first embodiment, there are cases in which an ion concentrating unit 40 is disposed on the downstream side of the removed water discharging unit 21 of the ion-selective removing unit 20, as shown in FIG. 1. The ion concentrating unit 40 is an apparatus in which the ions in the water that passes through the deionization unit 10 and the ion-selective removing unit 20 are further concentrated. Examples of the ion concentrating unit 40 include a deionization apparatus, a boiler, and a cooling tower.

As the deionization apparatus, a reverse osmosis membrane apparatus, an electrodialyzer (ED), an electro de-ionization device (EDI), or a ion-exchange resin apparatus can be disposed, and also the same deionization apparatus (capacitive de-ionization device) as the deionization unit 10 or the like can be disposed.

The reverse osmosis membrane apparatus is an apparatus having a reverse osmosis membrane having pores (about 0.5 nm) smaller than those of a nanofilter and having a higher ion removing ratio than the nanofilter. When a reverse osmosis membrane apparatus is disposed as the ion concentrating unit 40, the ions (monovalent ions) remaining in the water that passes through the deionization unit 10 and the ion-selective removing unit 20 are removed in the reverse osmosis membrane apparatus. In order to increase the ion removing ratio, a construction may be adopted in which a plurality of reverse osmosis membrane apparatus is connected in series. The scale deposition in the reverse osmosis membrane apparatus is suppressed because the concentration of divalent or more ions that are a scale in the water to be treated in the reverse osmosis membrane apparatus is greatly reduced by the water treatment system 1 of the present embodiment.

When a reverse osmosis membrane apparatus is disposed as the ion concentrating unit 40, an evaporator and a crystallizer may be disposed downstream of the concentrating unit side of the reverse osmosis membrane apparatus. In the evaporator and the crystallizer, water is evaporated from the concentrated water, and the ions contained in the concentrated water are deposited as a solid and collected as a solid.

When a reverse osmosis membrane apparatus is disposed as the ion concentrating unit 40, it is preferable that a pH adjusting unit 50 is further disposed on the downstream side of the ion-selective removing unit 20 and on the upstream side of the ion concentrating unit 40, as shown in FIG. 1.

The water to be treated contains ionic silica or silica having a solid form that is not ionized as other scale components. The ionic silica permeates through the water treatment system 1 because the removing ratio in the deionization unit and the ion-selective removing unit is low. Also, the non-ionic silica permeates through the water treatment system 1. The treated water after being treated in the water treatment system 1 contains ionic silica or silica having a solid form.

The solubility of silica that is present in water changes depending on the pH value, and the silica is considerably dissolved in water as ionic silica when the pH value is 9 or more. The pH adjusting unit 50 puts an alkali agent into the water so that the pH value (measured by pH not illustrated in FIG. 3) of the water that passes between the ion-selective removing unit 20 and the ion concentrating unit 40 becomes 9 or more. Here, the alkali agent is an aqueous solution of hydroxide of an alkali metal such as Na or K.

By adjusting the pH value in the pH adjusting unit 50, the scale production can be suppressed when a reverse osmosis membrane apparatus is disposed at a later stage.

When a boiler is disposed as the ion concentrating unit 40, the water having a reduced concentration of divalent or more ions that is discharged from the removed water discharging unit 21 of the ion-selective removing unit 20 is used as boiler-feeding water. Since water is evaporated from the boiler water by using, the boiler water before make-up is brought into a state having a high ion concentration. Therefore, scale production caused by concentration in the boiler can be prevented by using the boiler-feeding water in which the divalent or more ion concentration is greatly reduced by the water treatment system 1 of the present embodiment.

When a cooling tower is disposed as the ion concentrating unit 40, heat exchange is carried out between the water having a reduced concentration of divalent or more ions that is discharged from the removed water discharging unit 21 of the ion-selective removing unit 20 and a waste gas of a high temperature discharged from a boiler or the like. By this heat exchange, part of the water becomes water vapor, and the ions are concentrated in the cooling tower. Part of the concentrated water is discharged from the cooling tower as blow water.

By combining the cooling tower with the water treatment system 1 of the present embodiment, the water in which the ion concentration is sufficiently reduced is used in the cooling tower. For this reason, the degree of concentrating in the cooling tower can be increased, thereby improving the efficiency of using water in the cooling tower. Also, since the divalent or more ion concentration is greatly reduced by the water treatment system 1 of the present embodiment, scale production caused by concentration in the cooling tower can be prevented.

When a boiler or a cooling tower is disposed as the ion concentrating unit 40, a construction may be adopted in which, by combining with a deionization apparatus, the treated water produced by the deionization apparatus is fed to the boiler or the cooling tower. When combined with a reverse osmosis membrane apparatus, a construction may be adopted in which the water (water from which ions are removed) discharged from the evaporator and the crystallizer disposed on the downstream side of the concentrating unit of the reverse osmosis membrane apparatus is fed to the cooling tower or the boiler.

Here, since the water treatment system 1 of the present embodiment produces water in which the divalent or more ion concentration is reduced, the water treatment system 1 can be used also for producing water for washing in which the presence of alkaline earth metal ions raises a problem.

### Second Embodiment

FIGS. 3 and 4 are schematic views of water treatment systems according to the second embodiment of the present invention.

In the second embodiment, water in which the scale component constructed by containing divalent or more ions is close to the saturation solubility or lower than the saturation solubility is an object of treatment. For example, the water may be river water, sewage treated water, brine water, factory waste water, factory waste water treated water, or the like.

The sewage treated water and the factory waste water treated water are water after organic substances, harmful substances, and the like are removed. In order to remove the organic substances, harmful substances, and the like, a pretreatment unit and an organic substance treatment unit may be disposed on the upstream side of the water treatment system. In the pretreatment unit, oily components, heavy metals, floating particles, and the like in the water to be treated are removed from the water to be treated. The organic substance treatment unit has a construction in which a biological treatment unit that decomposes and removes organic substances by using microorganism, a chemical oxidation treatment unit that performs a chemical oxidation treatment on the organic substances, activated carbon, and an ultraviolet treatment apparatus are suitably combined.

Water treatment systems 101, 201 of FIGS. 3 and 4 include a deionization unit 110 and an ion-selective removing unit 120 having a construction similar to those of the first embodiment. The ion-selective removing unit 120 is disposed upstream of the deionization unit 110. In the same manner as in the first embodiment, an ion concentrating unit 140 and a pH adjusting unit 150 may be provided on the downstream side of the water treatment systems 101, 201.

An removed water discharging unit 121 of the ion-selective removing unit 120 is connected to the ion concentrating unit 140. A multivalent ion concentrated water discharging unit 122 of the ion-selective removing unit 120 is connected to the deionization unit 110. A treated water discharging passageway 117 of the deionization unit 110 is connected to the ion concentrating unit 140.

In the water treatment system 101 of FIGS. 3, the treated water discharging passageway 117 of the deionization unit 110 passes through a circulating unit 130 to be connected to a pipe located on the upstream side of the ion-selective removing unit 120.

In accordance with the water quality of the water to be treated, a construction of either FIG. 3 or FIG. 4 is selected. The circulating unit need not be provided, as shown in FIG. 4, when the divalent or more ion concentration in the water to be treated is extremely low and the divalent or more ion concentration in the treated water of the deionization unit 110 is sufficiently reduced.

A method of performing a process of removing ions in the water to be treated by using the water treatment system 101 of FIG. 3 or the water treatment system 201 of FIG. 4 will be described below.

### (a) Treatment in the ion-selective removing unit

The water to be treated flows into the ion-selective removing unit 120. In the same manner as in the first embodiment, the ion-selective removing unit 120 separates the water to be treated into multivalent ion concentrated water and water having a reduced concentration of divalent or more ions.

The water having a reduced concentration of divalent or more ions passes through the removed water discharging unit 121 to be discharged from the ion-selective removing unit 120. The discharged water is fed to the ion concentrating unit 140.

The multivalent ion concentrated water passes through the multivalent ion concentrated water discharging unit 122 to be discharged from the ion-selective removing unit 120 and fed to the deionization unit 110.

### (b) Treatment in the deionization unit

The deionization unit 110 performs a deionization step and a regeneration step similar to those of the first embodiment, to treat the multivalent ion concentrated water. In the second embodiment, the divalent or more ions in the multivalent ion concentrated water are adsorbed and removed in the deionization step.

The concentrated water produced by the regeneration step passes through the concentrated water discharging passageway 118 to be discharged to outside of the water treatment system 101 of FIG. 3 or the water treatment system 201 of FIG. 4.

In the water treatment system 101 of FIG. 3, the treated water passes through the treated water discharging passageway 117 and the circulating unit 130 to be fed to the ion-selective removing unit 120. The fed treated water joins with the water to be treated and flows into the ion-selective removing unit 120. In other words, in the water treatment system 101 of FIG. 3, the multivalent ion concentrated water is circulated to the ion-selective removing unit 120 after passing through the deionization unit 110.

In the water treatment system 201 of FIG. 4, the treated water that is subjected to the deionization process by the deionization step passes through the treated water discharging passageway 117 to be joined with the water discharged from the ion-selective removing unit 120 and having a reduced concentration of divalent or more ions. Thereafter, the treated water is fed to the ion concentrating unit 140 together with the water having a reduced concentration of divalent or more ions.

Table 3 shows a result of simulation when water containing ions is treated in the water treatment system of FIG. 3 as Example 2. Table 3 shows the concentration of ions and the total dissolved solid (TDS: Total Dissolved Solids) concentration contained in the water to be treated (factory waste water) and the water that passes through the pipes L₂₋₁ to L₂₋₅. The positions of the pipes L₂₋₁ to L₂₋₅ are as follows.
L₂₋₁: ion-selective removing unit entrance pipe (downstream side of the circulating unit connecting position)
L₂₋₂: deionization unit entrance pipe (connected to the multivalent ion concentrated water discharging unit)
L₂₋₃: concentrated water discharging passageway
L₂₋₄: circulating unit pipe (connected to the treated water discharging passageway)
L₂₋₅: removed water discharging unit pipe of the ion-selective removing unit

The simulation was carried out under the following conditions.
deionization unit: water collecting ratio 80%, ion removing ratio 80%.
ion-selective removing unit: water collecting ratio 85%, divalent or more ion removing ratio 98%, monovalent ion removing ratio 60%.

As Comparative Example 2, simulation was carried out when water treatment was carried out on the water having the same property as in the above Example 2 with a water treatment system having only a deionization unit. Table 4 shows the TDS concentration and the concentration of ions contained in the water to be treated, the treated water of the deionization unit, and the concentrated water. The simulation was carried out under conditions with water collecting ratio of 80% and ion removing ratio of 80% in the deionization unit.

**[TABLE 3]**

| | TDS concentration, ion concentration (mg/l) | | | | | |
|---|---|---|---|---|---|---|
| | Water to be treated | L2-1 | L2-2 | L2-3 | L2-4 | L2-5 |
| TDS | 2078 | 2074.6 | 10362.3 | 43522 | 2072.5 | 612 |
| Ca²⁺ | 135 | 141 | 924 | 3879.8 | 184.8 | 2.8 |
| Mg²⁺ | 25 | 26.1 | 171 | 718.4 | 34.2 | 0.5 |
| Na⁺ | 517 | 509 | 2238 | 9401 | 447.6 | 203.5 |
| K⁺ | 35 | 34 | 152 | 636 | 30.3 | 13.8 |
| NH₄⁺ | 2 | 2 | 8.6 | 36 | 1.7 | 0.8 |
| SO₄²⁻ | 400 | 417.6 | 2737 | 11495 | 547.4 | 8 |
| CO₃²-/HCO₃⁻ | 300 | 295 | 1299 | 5455.1 | 259.8 | 118 |
| Cl⁻ | 643 | 633 | 2784 | 11692 | 557 | 253.1 |
| NO₃⁻ | 4 | 4.2 | 27.4 | 115 | 5.5 | 0.08 |

**[TABLE 4]**

| | TDS concentration, ion concentration (mg/l) | | |
|---|---|---|---|
| | Water to be treated | Treated water | Concentrated water |
| TDS | 2078 | 416 | 8728 |
| Ca²⁺ | 135 | 27 | 567 |
| Mg²⁺ | 25 | 5 | 105 |
| Na⁺ | 517 | 103 | 2171 |
| K⁺ | 35 | 7 | 147 |
| NH₄⁺ | 2 | 0.4 | 8 |
| SO₄²⁻ | 400 | 80 | 1680 |
| CO₃²-/HCO₃⁻ | 300 | 60 | 1260 |
| Cl⁻ | 643 | 129 | 2701 |
| NO₃⁻ | 4 | 0.8 | 17 |

In the water treatment system of Example 2, the concentration of divalent or more ions (Ca²⁺, Mg²⁺, SO₄²⁻) in the treated water of L₂₋₅ is greatly reduced as compared with the water treatment system of Comparative Example 2 in which the water to be treated having the same property is treated.

In the case in which water having a lower divalent or more ion concentration than the water to be treated of Example 2 is treated, the divalent or more ion concentration in the treated water of L₂₋₄ is further more reduced than in Table 3. Therefore, a circulating unit need not be provided, as shown in FIG. 4, when the water quality of the treated water of the deionization unit (corresponding to L₂₋₄ of Table 3) is of the same degree as the water quality of the after-removal water of the ion-selective removing unit (corresponding to L₂₋₅ of Table 3).

The ion concentrating unit 140 may include a deionization apparatus, a boiler, and a cooling tower in the same manner as in the first embodiment, and a construction in which these are combined may be adopted.

When a reverse osmosis membrane apparatus is adopted as the deionization apparatus, an evaporator or a crystallizer may be disposed on the downstream side of the reverse osmosis membrane apparatus.

Also, it is preferable that a pH adjusting unit 50 for suppressing deposition of silica by adjusting the pH value of the water is further disposed on the upstream side of the ion concentrating unit 140 and on the downstream side of the water treatment system. By adjusting the pH value in the pH adjusting unit 50, scale production can be suppressed when a reverse osmosis membrane apparatus is disposed at a later stage.

As described above, in the water treatment system 101, 201 of the second embodiment, the ion removing ratio and the water collection ratio can be advantageously raised when the water to be treated in which the scale component constructed by containing divalent or more ions is close to the saturation solubility or lower than the saturation solubility is treated. In the water treatment system 101 of FIG. 3, the treated water of the deionization unit 110 is supplied again to the ion-selective removing unit 120, so that the divalent or more ion concentration in the treated water discharged from the ion-selective removing unit 120 is greatly reduced. For this reason, the scale production in the apparatus disposed on the downstream side of the water treatment system 101, 201 can be effectively suppressed.

The water treated by the water treatment system 101, 201 of the second embodiment can be used as water for washing because the alkaline earth metal ions are reduced.

### Third Embodiment

FIG. 5 is a schematic view describing a construction in which, as a third embodiment of the present invention, Ca is separated and collected as a solid from the concentrated water of the deionization unit in the water treatment system of the first embodiment.

A concentrated water discharging passageway 18 of a water treatment system 1 is connected to a separation unit 300. The separation unit 300 includes a precipitation unit 301 and a dehydration unit 302. FIG. 5 exemplifies a case in which CaCO₃ is collected from the concentrated water containing Ca²⁺ and CO₃²⁻ as major scale component ions in the water treatment system of FIG. 1.

The separation unit 300 of FIG. 5 includes a first precipitation apparatus 301a and a second precipitation apparatus 301b as the precipitation unit 301. The concentrated water discharging passageway 18 is connected to the first precipitation apparatus 301a, and the concentrated water of the deionization unit 10 is supplied to the first precipitation apparatus 301a. For pH adjustment, Ca(OH)₂ is put into the first precipitation apparatus 301a. When CaCO₃ becomes supersaturated, CaCO₃ is deposited and precipitated at the bottom part of the first precipitation apparatus 301a. The heavy metals contained in the concentrated water also are precipitated at the bottom part of the first precipitation apparatus 301a.

The first precipitation apparatus 301a and the second precipitation apparatus 301b are connected to each other. When the Ca²⁺ concentration is relatively higher than the CO₃²⁻ concentration in the first precipitation apparatus 301a, supernatant liquid containing Ca²⁺ is fed from the first precipitation apparatus 301a to the second precipitation apparatus 301b. Na₂CO₃ is put into the second precipitation apparatus 301b, and Ca²⁺ is deposited as CaCO₃ and precipitated at the bottom part.

The supernatant liquid in the second precipitation apparatus 301b contains the scale component ions that cannot be separated in the first precipitation apparatus 301a and the second precipitation apparatus 301b. In FIG. 5, the supernatant liquid of the second precipitation apparatus 301b is discharged from the second precipitation apparatus 301b and supplied to the upstream side of the deionization unit 10. Here, the second precipitation apparatus 301b may be connected to the treated water discharging passageway 17, and the supernatant liquid of the second precipitation apparatus 301b may be supplied to the ion-selective removing unit 20. The destination of supply of the supernatant liquid can be suitably selected in accordance with the property of the supernatant liquid, the property of the water to be treated, and the property of the treated water of the deionization unit 10.

The bottom parts of the first precipitation apparatus 301a and the second precipitation apparatus 301b are connected to the dehydration unit 302. Water containing a precipitate is discharged from the bottom parts of the first precipitation apparatus 301a and the second precipitation apparatus 301b and fed to the dehydration unit 302. The dehydration unit 302 separates water from the solid substance, and a sludge containing CaCO₃ is collected. The water separated in the dehydration unit 302 is circulated to the first precipitation apparatus 301a.

### <Fourth Embodiment>

FIG. 6 is a schematic view describing a construction in which, as a fourth embodiment of the present invention, Ca is separated and collected as a solid from the concentrated water of the deionization unit in the water treatment system of the second embodiment. FIG. 6 exemplifies a case in which CaCO₃ is collected from the concentrated water containing Ca²⁺ and CO₃²⁻ as major scale component ions in the water treatment system of FIG. 3. In FIG. 6, the same constituent elements as appear in FIG. 5 are denoted with the same reference signs.

The construction of the separation unit 400 is the same as in the third embodiment. FIG. 6 shows a construction in which the supernatant liquid of the second precipitation apparatus 301b is circulated to the upstream side of the ion-selective removing unit 120. Here, the second precipitation apparatus 301b may be connected to a pipe between the ion-selective removing unit 120 and the deionization unit 110, and the supernatant liquid of the second precipitation apparatus 301b may be circulated to the deionization unit 110. The destination of supply of the supernatant liquid can be suitably selected in accordance with the property of the supernatant liquid, the property of the water to be treated, and the property of the multivalent ion concentrated water of the ion-selective removing unit 120.

In the constructions of the third and fourth embodiments, the water after collecting the sludge from the concentrated water of the deionization unit is circulated to the water treatment system, so that the water collecting ratio can be further more improved.

### <Fifth Embodiment>

FIG. 7 is a schematic view describing a construction in which, as a fifth embodiment of the present invention, a separation unit is disposed upstream of the water treatment system of the first embodiment. FIG. 7 shows an example of a construction connected to the water treatment system of FIG. 1, where the scale component ions in the water to be treated are mainly Ca²⁺ and CO₃²⁻. In FIG. 7, the same constituent elements as appear in FIG. 5 are denoted with the same reference signs.

The separation unit 500 of the fifth embodiment includes a precipitation unit 301 and a dehydration unit 302 in the same manner as in the third embodiment. The supernatant liquid of the second precipitation apparatus 301b is fed to the deionization unit 10 of the first embodiment. The construction of the separation unit 500 other than that is the same as in the third embodiment.

In FIG. 7, the circulating unit 30 is connected to a pipe between the second precipitation apparatus 301b and the deionization unit 10, and the multivalent ion concentrated water of the ion-selective removing unit 20 is fed to the deionization unit 10 together with the supernatant liquid. However, in accordance with the property of the multivalent ion concentrated water, the property of the water to be treated, and the property of the supernatant liquid, a construction may be adopted in which the circulating unit 30 is connected to the first precipitation apparatus 301a, and the multivalent ion concentrated water is fed to the first precipitation apparatus 301a.

The construction of the fifth embodiment is effective when the water to be treated has a water quality in which Ca²⁺ exceeds the saturation concentration. When the water to be treated having an extremely high Ca²⁺ concentration flows into the water treatment system 1, the deionization unit 10 cannot remove Ca²⁺ sufficiently, and the treated water of the deionization unit 10 flows into the ion-selective removing unit 20 in a state in which the Ca²⁺ concentration in the treated water of the deionization unit 10 is high. In this case, the Ca²⁺ concentration on the concentrating unit side of the ion-selective removing unit 20 becomes high, thereby raising a fear that a scale may be produced in the ion-selective removing unit 20. Also, in such a case, there is a possibility that the removal of scale components by the water treatment system 1 may become insufficient.

According to the construction of the fifth embodiment, Ca²⁺ in the water to be treated is removed in advance, and the concentration of the water to be treated can be reduced to be close to the saturation concentration of Ca²⁺ immediately before flowing into the water treatment system 1. Therefore, scale production in the apparatus disposed at a stage posterior to the separation unit 500, that is, in the ion-selective removing unit and the ion concentrating unit, can be prevented.

### <Sixth Embodiment>

FIG. 8 is a schematic view describing a construction in which, as a sixth embodiment of the present invention, a separation unit is disposed upstream of the water treatment system of the second embodiment. FIG. 8 shows an example of a construction connected to the water treatment system of FIG. 3, where the scale component ions in the water to be treated are mainly Ca²⁺ and CO₃²⁻. In FIG. 8, the same constituent elements as appear in FIG. 5 are denoted with the same reference signs.

Here, in the sixth embodiment, a construction may be adopted in which a separation unit is disposed in the water treatment system of FIG. 4.

The separation unit 600 of the sixth embodiment includes a precipitation unit 301 and a dehydration unit 302 in the same manner as in the third embodiment. The supernatant liquid of the second precipitation apparatus 301b is fed to the ion-selective removing unit 120 of the second embodiment. The construction of the separation unit 600 other than that is the same as in the fourth embodiment.

In FIG. 8, the concentrated water discharging passageway 118 is connected to the first precipitation apparatus 301a, and the concentrated water of the deionization unit 110 is fed to the first precipitation apparatus 301a. However, in accordance with the property of the concentrated water, the property of the water to be treated, and the property of the supernatant liquid, a construction may be adopted in which the concentrated water discharging passageway 118 is connected to a pipe between the second precipitation apparatus 301b and the ion-selective removing unit 120, and the concentrated water is fed to the ion-selective removing unit 120.

When CaCO₃ is collected as described above, the pH value at the precipitation unit 301 is adjusted to be about 10, so as to lower the saturation solubility of CaCO₃ to facilitate deposition. On the other hand, the water treatment system is preferably under conditions such that CaCO₃ is hardly deposited (specifically, about pH 7). Therefore, in the case of collecting CaCO₃, it is preferable that a neutralization unit (not illustrated in the drawings) is provided on the downstream side of the second precipitation apparatus 301b, and the supernatant liquid discharged from the second precipitation apparatus 301b is fed to the deionization unit and the ion-selective removing unit after the pH value of the supernatant liquid is adjusted to be about 7 in the neutralization unit.

Even when the major scale component ions of the water to be treated are a combination other than Ca²⁺ and CO₃²⁻, the scale component ions can be collected as a solid by providing a separation unit in the same manner as in the third to sixth embodiments. Also, by providing an arrangement similar to that of the fifth and sixth embodiments, the concentration of scale component ions other than Ca²⁺ and CO₃²⁻ can be reduced.

However, CaSO₄ has a low solubility to water. When the separation unit mainly collects CaSO₄, the second precipitation apparatus is unnecessary, so that a construction may be adopted in which the supernatant liquid of the first precipitation apparatus is circulated to the upstream side of the deionization unit or the ion-selective removing unit.

### {Reference Signs List}

- 1, 101, 201:: water treatment system
- 10, 110:: deionization unit
- 11, 13:: electrode
- 12:: anion-exchange membrane
- 14:: cation-exchange membrane
- 15:: flow passageway
- 16:: discharging passageway
- 17, 117:: treated water discharging passageway
- 18, 118:: concentrated water discharging passageway
- 20, 120:: ion-selective removing unit
- 21, 121:: removed water discharging unit
- 22, 122:: multivalent ion concentrated water discharging unit
- 30, 130:: circulating unit
- 40, 140:: ion concentrating unit
- 50, 150:: pH adjusting unit
- 300, 400, 500, 600:: separation unit
- 301:: precipitation unit
- 301a:: first precipitation apparatus
- 301b:: second precipitation apparatus
- 302:: dehydration unit

## Claims

1. A water treatment system comprising:
a deionization unit including a pair of opposing electrodes that is charged to have polarities opposite to each other, a flow passageway positioned between the electrodes and enabling passage of water containing ions, and an ion-exchange membrane that is disposed on the flow passageway side of each of the electrodes, and performing a deionization process of deionizing the water containing the ions by allowing the ions to be adsorbed onto the electrodes and a regeneration process of eliminating the ions from the electrodes; and
an ion-selective removing unit disposed on a downstream side or upstream side of the deionization unit to separate and remove divalent or more ions from the water containing the ions because a ratio of removing the divalent or more ions that are the scale component among the ions is relatively higher than a ratio of removing monovalent ions from the water containing the ions.

2. The water treatment system according to claim 1, wherein the ion-selective removing unit is disposed on the downstream side of the deionization unit, and the ion-selective removing unit removes the divalent or more ions from the treated water that is subjected to the deionization process in the deionization unit.

3. The water treatment system according to claim 2, wherein multivalent ion concentrated water containing the divalent or more ions that is separated in the ion-selective removing unit is discharged from the ion-selective removing unit and supplied to an upstream side of the deionization unit.

4. The water treatment system according to claim 1, wherein the ion-selective removing unit is disposed on an upstream side of the deionization unit, and the deionization unit receives multivalent ion concentrated water containing the divalent or more ions that is separated in the ion-selective removing unit, to perform a deionization process on the multivalent ion concentrated water.

5. The water treatment system according to claim 4, wherein treated water that is discharged from the deionization unit in the deionization process is supplied to an upstream side of the ion-selective removing unit.

6. The water treatment system according to claims 1 to 5, wherein an ion concentrating unit that receives the treated water and the water subjected to removal of the divalent or more ions in the ion-selective removing unit to concentrate the ions in the received water is disposed on a downstream side of the deionization unit and the ion-selective removing unit.

7. The water treatment system according to claim 6, wherein the ion concentrating unit includes at least one of a deionization apparatus, a cooling tower, and a boiler.

8. The water treatment system according to claim 6 or 7, wherein a pH adjusting unit that adjusts a pH value of the water subjected to removal of the divalent or more ions by putting an alkali metal hydroxide into the water subjected to removal of the divalent or more ions is disposed on a downstream side of the deionization unit and the ion-selective removing unit and on an upstream side of the ion concentrating unit.

9. The water treatment system according to any of claims 1 to 8, wherein
the deionization unit is connected to a separation unit that receives concentrated water that is discharged from the deionization unit in the regeneration process;
the separation unit includes a precipitation unit that deposits and precipitates the divalent or more ions in the concentrated water as a solid and a dehydration unit that separates the solid from the water containing the solid that is discharged from the precipitation unit; and
supernatant liquid in the precipitation unit is supplied to an upstream side of the deionization unit or to an upstream side of the ion-selective removing unit.

10. The water treatment system according to any of claims 1 to 8, wherein
a separation unit including a precipitation unit that deposits and precipitates the divalent or more ions in the water containing the ions as a solid and a dehydration unit that separates the solid from the water containing the solid that is discharged from the precipitation unit is disposed on an upstream side of the deionization unit; and
supernatant liquid discharged from the precipitation unit is fed to the deionization unit or to the ion-selective removing unit to be subjected to the deionization process.
